# EUROPEAN PATENT SPECIFICATION

(11) **EP 4 503 545 B1**
(45) Date of publication and mention of the grant of the patent: **15.07.2026**
(21) Application number: 22934050.0
(22) Date of filing: 29.03.2022
(51) Int. Cl.: H04L 41/50, H04L 41/5003, H04W 76/12, H04W 76/15

(54) **AUGMENTED REALITY SERVICE SUPPORT CAPABILITY NEGOTIATION METHOD AND APPARATUS, NETWORK ELEMENT, UE, AND STORAGE MEDIUM**
VERFAHREN UND VORRICHTUNG ZUR AUSHANDLUNG DER FÄHIGKEIT EINES DIENSTES DER ERWEITERTEN REALITÄT, NETZWERKELEMENT, BENUTZERGERÄT UND SPEICHERMEDIUM
PROCÉDÉ ET APPAREIL DE NÉGOCIATION DE CAPACITÉ DE PRISE EN CHARGE DE SERVICE DE RÉALITÉ AUGMENTÉE, ÉLÉMENT DE RÉSEAU, UE, ET SUPPORT DE STOCKAGE

(43) Date of publication of application: 05.02.2025
(73) Proprietor: Beijing Xiaomi Mobile Software Co., Ltd., Beijing 100085 (CN)
(72) Inventor: WU, Jinhua, Beijing 100085 (CN); LIU, Jianning, Beijing 100085 (CN); SHEN, Yang, Beijing 100085 (CN)
(74) Representative: Stöckeler, Ferdinand
(86) International application number: PCT/CN2022/083874
(87) International publication number: WO 2023/184195

(56) References cited:
- WO-A1-2021/167304
- WO-A1-2021/187881
- CN-A- 109 818 769
- CN-A- 109 996 303
- CN-A- 113 747 510
- US-A1- 2014 120 887
- US-A1- 2017 090 589
- US-A1- 2021 219 124
- US-A1- 2023 084 094
- ERICSSON ET AL: "Notification of SM Policy Association Establishment", vol. SA WG2, no. Electronic; 20210816 - 20210827, 28 August 2021 (2021-08-28), XP052059501, Retrieved from the Internet <URL:https://ftp.3gpp.org/tsg_sa/WG2_Arch/TSGS2_146E_Electronic_2021-08/Docs/S2-2106969.zip S2-2106969_was05420r03_23.502_Notification_SM Policy Association.docx> [retrieved on 20210828]
- ERICSSON, CHINA MOBILE: "Notification of SM Policy Association Establishment", 3GPP DRAFT; S2-2106969, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Electronic; 20210816 - 20210827, 28 August 2021 (2021-08-28), Mobile Competence Centre ; 650, route des Lucioles ; F-06921 Sophia-Antipolis Cedex ; France, XP052059501

## Description

### FIELD

The present invention relates to a technology, and more particularly, to a method and apparatus for negotiating an augmented reality service support capability, a user equipment (UE), and a storage medium.

### BACKGROUND

Mobile media services, extended reality (XR) services such as cloud augmented reality (AR)/virtual reality (VR), cloud games, and video-based machine or unmanned aerial vehicle remote control, are expected to contribute higher and higher traffic to the 5G network. XR services involve multi-modal data flows. Multi-modal data is data that describes the input of the same service/application from the same device or different devices, which may be output to one or more destination equipment. Data flows in multi-modal data often have some or even strong correlation, such as synchronization of audio and video streams, synchronization of tactile and visual sense, etc. The data flows of such media services themselves, between data flows, and the need for network transmission for these service data flows share common features, and the effective identification and utilization of these features will be more conducive to network and service transmission, control, as well as to service provisioning and user experience.

However, the current 5GS system adopts the quality of service (QoS) mechanism to deal with various data services including XR services, fails to fully consider the characteristics of XR media services and multi-modal services, and there is no corresponding QoS and policy mechanism to meet the corresponding service requirements. In order to support the transmission of XRM services and multi-modal data flows, the network first needs to be able to identify the corresponding device and service data and determine the functional support of the network and equipment. The current 5GS system function also does not support such requirements, and there is no corresponding technical solution for reference.

US20210219124A1 discloses methods and apparatus enabling a terminal to request and establish a home-routed PDU session across private and public networks via AMF and SMF entities. WO2021187881A1 discloses a UE procedure for indicating PDU-session-pair information to the network only when the serving SMF signals support, avoiding redundant signaling. WO2021167304A1 discloses UE procedures for handling PS Data Off during PDU session establishment and handover between 3GPP and non-3GPP accesses, including status reporting. S2-2106969 discloses a 3GPP TSG-SA2 change request (CR 2905 rev 1) proposing two methods for PCF notification of SM Policy Association establishment via BSF subscription or AMF/SMF request, aiming to reduce excessive signaling in colocated deployments.

### SUMMARY

In view of the above, embodiments of the present invention provide a method and apparatus for negotiating an augmented reality service support capability, a network element, a user equipment, and a storage medium. The invention is set out in the appended set of claims.

The technical solution of the embodiments of the present invention provides a capability support and negotiation mechanism for an XRM service and a multi-modal data service for a user equipment, so that an operation network provides corresponding XRM service support for the UE supporting the XRM service and the multi-modal data service, provides the XRM service with a better QoS for the UE, and improves a user experience.

### BRIEF DESCRIPTION OF THE DRAWINGS

The accompanying drawings, which are incorporated in and constitute a part of this specification, illustrate embodiments of the invention and, together with the description, serve to explain the principles of the embodiments of the invention.
FIG. 1 is a structural diagram of a wireless communication system according to an example embodiment;
FIG. 2 is a flow chart of a method for negotiating an augmented reality service support capability according to an example embodiment;
FIG. 3 is a flow chart of a method for negotiating an augmented reality service support capability according to an example embodiment;
FIG. 4 is a flow chart of a method for negotiating an augmented reality service support capability according to an example embodiment;
FIG. 5 is a flow chart of a method for negotiating an augmented reality service support capability according to an example embodiment;
FIG. 6 is a flow chart of a method for negotiating an augmented reality service support capability according to an example embodiment;
FIG. 7 is a flow chart of a method for negotiating an augmented reality service support capability according to an example embodiment;
FIG. 8 is a flow chart of a method for negotiating an augmented reality service support capability according to an example embodiment;
FIG. 9 is a flow chart of a method for negotiating an augmented reality service support capability according to an example embodiment;
FIG. 10 is a structural diagram of composition of an apparatus for negotiating an augmented reality service support capability according to an example embodiment;
FIG. 11 is a structural diagram of composition of an apparatus for negotiating an augmented reality service support capability according to an example embodiment;
FIG. 12 is a structural diagram of composition of an apparatus for negotiating an augmented reality service support capability according to an example embodiment;
FIG. 13 is a structural diagram of composition of an apparatus for negotiating an augmented reality service support capability according to an example embodiment;
FIG. 14 is a structural diagram of composition of an apparatus for negotiating an augmented reality service support capability according to an example embodiment;
FIG. 15 is a structural diagram of composition of an apparatus for negotiating an augmented reality service support capability according to an example embodiment; and
FIG. 16 is a structural diagram of composition of a user equipment according to an example embodiment.

### DETAILED DESCRIPTION

Reference will now be made in detail to example embodiments, examples of which are illustrated in the accompanying drawings. Where the following description refers to the accompanying drawings, like numbers in different drawings indicate the same or similar elements, unless otherwise indicated. The embodiments described in the following example embodiments do not represent all embodiments consistent with the embodiments of the present invention. Rather, they are merely examples of apparatus and methods consistent with certain aspects of the embodiments of the present invention as detailed in the appended claims.

The terminology used in the embodiments of the disclosure is for the purpose of describing particular embodiments only and is not intended to be limiting of the embodiments of the disclosure. As used in the embodiments of the disclosure and the appended claims, the singular forms "a", "an", and "the" are intended to include the plural forms as well, unless the context clearly indicates otherwise. It should also be understood that the term "and/or" as used herein refers to and encompasses any and all possible combinations of one or more of the associated listed items.

It should be understood that, although the terms first, second, third, etc. may be used in describing various information in embodiments of the present invention, such information should not be limited to these terms. These terms are only used to distinguish one type of information from another. For example, first information may also be referred to as second information, and similarly, second information may also be referred to as first information, without departing from the scope of embodiments of the present invention. Depending on the context, the word "if" as used herein may be interpreted as "at" or "when" or "in response to a determining".

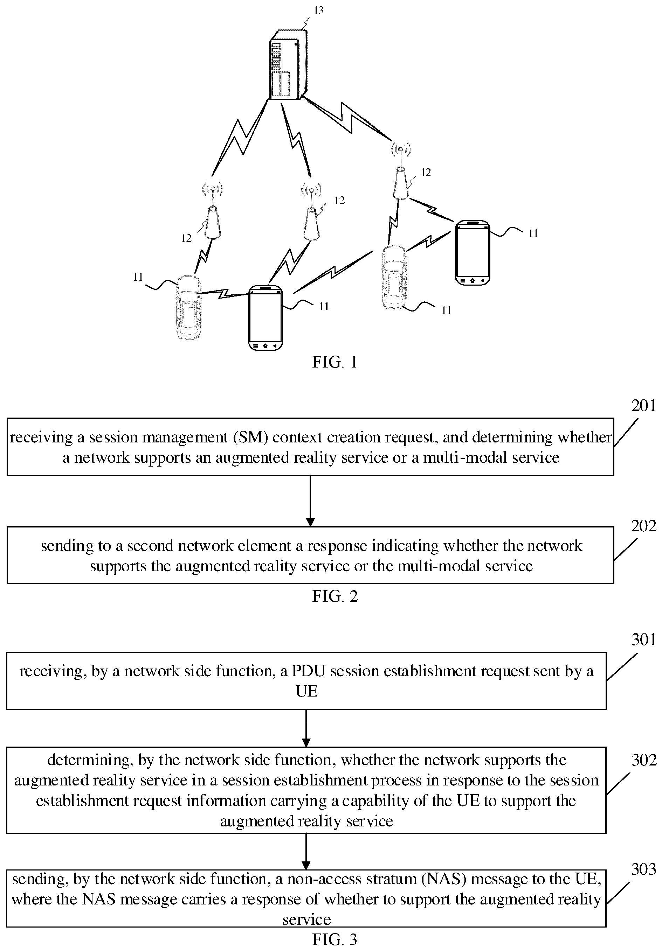

Referring to FIG. 1, a structural diagram of a wireless communication system provided by an embodiment of the present invention is shown. As shown in FIG. 1, the wireless communication system is a communication system based on cellular mobile communication technology, and the wireless communication system may include: several terminals 11 and several base stations 12.

The terminal 11 may be an equipment providing voice and/or data connectivity to a user. The terminal 11 may communicate with one or more core networks via a radio access network (RAN) and may be an Internet of Things terminal, such as a sensor equipment, a mobile phone (or "cellular" phone), and a computer having an Internet of Things terminal, which may be, for example, a fixed, portable, pocket, handheld, computer-built, or vehicle-mounted apparatus. For example, a Station (STA), subscriber unit, subscriber station, mobile station, mobile, remote station, access point, remote terminal, access terminal, user terminal, user agent, user device, or user equipment (UE). Alternatively, the terminal 11 may be the equipment of an unmanned aerial vehicle. Alternatively, the terminal 11 may be vehicle-mounted equipment, for example, a driving computer having a wireless communication function or wireless communication equipment externally connected to the driving computer. Alternatively, the terminal 11 may be roadside equipment, such as a street lamp, signal lamp, or other roadside equipment having a wireless communication function.

The base station 12 may be network side equipment in a wireless communication system. Where the wireless communication system can be the 4th generation mobile communication (4G) system, also known as a long term evolution (LTE) system; alternatively, the wireless communication system may be a 5G system, also known as a new radio (NR) system or a 5G NR system. Alternatively, the wireless communication system may be any generation system. Among others, the access network in the 5G system may be referred to as NG-RAN (New Generation-Radio Access Network); alternatively, the MTC system.

The base station 12 may be an evolved base station (eNB) used in a 4G system. Alternatively, the base station 12 may be a gNB in a 5G system using a centralized distributed architecture. When the base station 12 employs a centralized distributed architecture, it typically includes a central unit (CU) and at least two distributed units (DU). A protocol stack of a packet data convergence protocol (PDCP) layer, a radio link layer control protocol (RLC) layer, and a media access control (MAC) layer is provided in the concentration unit; the distribution unit is provided with a physical (PHY) layer protocol stack, and the embodiments of the present invention do not limit the specific implementation of the base station 12.

A wireless connection can be established between the base station 12 and the terminal 11 via a wireless air interface. In different embodiments, the wireless air interface is a wireless air interface based on a fourth generation mobile communication network technology (4G) standard; alternatively, the wireless air interface is a wireless air interface based on a fifth generation mobile communication network technology (5G) standard, for example, the wireless air interface is a new air interface; alternatively, the wireless air interface may be a wireless air interface based on 5G's next generation mobile communication network technology standard.

In some embodiments, an E2E (End to End) connection may also be established between terminals 11; scenarios such as V2V (vehicle to vehicle) communication, V2I (vehicle to infrastructure) communication, and V2P (vehicle to pedestrian) communication in vehicle to everything (V2X).

In some embodiments, the wireless communication system may further include network management equipment 13.

Executive subjects to which embodiments of the present invention relate include, but are not limited to: a terminal (i.e., a user equipment, UE) in a cellular mobile communication system, and a base station for cellular mobile communication, etc.

FIG. 2 is a flow chart of a method for negotiating an augmented reality service support capability according to an example embodiment. As shown in FIG. 2, the method for negotiating an augmented reality service support capability of an embodiment of the present invention is applied to a first network element, and the method for negotiating an augmented reality service support capability includes the following processing steps.

In block 201, a session management (SM) context creation request is received, and it is determined whether a network supports an augmented reality service.

In an embodiment of the present invention, the first network element may include a session management function (SMF). A person skilled in the art would understand that other network elements of the core network may also be enabled as the first network element in the case where the function of the SMF is implemented by other network elements. Alternatively, other network elements of other network elements of the core network are configured with corresponding functions of the first network element of the embodiments of the present invention, they may also be enabled as the first network element.

In the embodiments of the present invention, the augmented reality service specifically includes an XRM service such as a virtual reality service (VR) and an augmented reality service (AR), and also includes a multi-modal service.

In the embodiments of the present invention, the SM context creation request carries a first cell, and the first cell carries the capability of a user equipment (UE) to support an augmented reality service. As an implementation, the first cell includes 5GSM core network capability or PCO.

In an embodiment of the present invention, the first network element may determine and judge whether the network supports the augmented reality service of the PDU session according to at least one of subscription information, a network support capability, and a local policy.

In block 202, a response of whether the network supports the augmented reality service is sent.

In an embodiment of the present invention, a first network element sends a response of whether a network supports an augmented reality service to a second network element, and the second network element may be an AMF. A person skilled in the art would understand that other network elements of the core network can also be enabled as a second network element in the case where the function of the AMF is implemented by the other network elements. Alternatively, where other network elements of the core network are configured with corresponding functions of the second network element of the embodiments of the present invention, they may also be enabled as second network elements.

In the embodiments of the present invention, the capability of whether the network supports the augmented reality service is carried in an SM context creation response or an update response and is sent to the second network element.

When the SMF determines that the network supports an augmented reality service or a multi-modal service, sending protocol data unit (PDU) session establishment acception information to the second network element, where the PDU session establishment acception information carries a quality of service (QoS) parameter for supporting the augmented reality service or the multi-modal service.

In the embodiments of the present invention, in the case where it is determined that the network supports the augmented reality service or the multi-modal service, it may further include: locally executing a decision on the policy and charging rule at SMF. Alternatively, as an implementation, executing a policy control function PCF selection; based on the selected PCF, an augmented reality service rule or a multi-modal service rule is determined, or a data flow PCC rule for supporting an augmented reality service or a multi-modal service is determined.

FIG. 3 is a flow chart illustrating a method for negotiating an augmented reality service support capability according to an example embodiment, and the method for negotiating an augmented reality service support capability of an embodiment of the present invention is performed by a network side function, including the following processing steps.

In block 301, the network side function receives the PDU session establishment request sent by the UE.

In block 302, in response to the session establishment request information carrying the capability of the UE to support the augmented reality service, the network side function determines whether the network supports the augmented reality service in the session establishment process.

In block 303, the network side function sends a non-access stratum (NAS) message to the UE, carrying a response of whether the augmented reality service is supported.

In embodiments of the present invention, the session establishment request information carrying the capability of the UE to support the augmented reality service includes: the session establishment request carries a 5GSM core network capability, and the 5GSM core network capability contains the capability of the UE to support the augmented reality service.

Alternatively, as an implementation method, the session establishment request information carrying the capability of the UE to support the augmented reality service includes: the session establishment request carries a PCO, and the PCO includes the capability of the UE to support the augmented reality service.

As an example, the network side function includes a first network element and a second network element, where the first network element includes an SMF, and the second network element may include an AMF, etc.

When the network side function includes a first network element, the first network element receives a session management (SM) context creation request, determines whether the network supports an augmented reality service; and sends to a second network element a response indicating whether the network supports the augmented reality service; where the SM context creation request carries a first cell, and the first cell carries the capability of a user equipment (UE) to support the augmented reality service; a PDU session establishment acception information is sent to the second network element, where the PDU session establishment acception information carries a QoS parameter for supporting an augmented reality service.

The first network element determines and judges whether the network supports the augmented reality service of the PDU session according to at least one of subscription information, a network support capability, and a local policy; sends to the second network element the capability that whether the network supports an augmented reality service.

In the case where it is determined that the network supports the augmented reality service, the first network element locally executes the decision of the policy and charging rule; or executes PCF selection, determining a virtual reality service rule based on the selected PCF, or determining a data flow PCC rule for supporting the virtual reality service.

When the network side function includes a second network element, the second network element receives a PDU session establishment request sent by a UE, selects a first network element based on the PDU session establishment request, and sends an SM context creation request to the selected first network element; the SM context request carries the capability of the UE to support the augmented reality service; and after receiving the PDU session establishment acception information returned by the first network element, the second network element sends the PDU session identifier and the PDU session establishment acception information to the UE via a NAS message.

The second network element stores the capability of the UE to support the augmented reality service as a PDU session level context in a UE context.

Specifically, a second network element receives a PDU session establishment request sent by a UE, selects a first network element based on the PDU session establishment request, and sends an SM context creation request to the selected first network element; the first network element sends to the second network element the capability of whether the network supports an augmented reality service; after authenticating the PDU session, the first network element locally executes a decision of the policy and charging rule; or executes PCF selection, and determines an augmented reality service rule or a multi-modal service rule or determines a data flow PCC rule for supporting the augmented reality service or the multi-modal service based on the selected PCF; PDU session establishment acception information sent by the first network element to the second network element, where the PDU session establishment acception information carries a QoS parameter for supporting an augmented reality service or a multi-modal service; the second network element sends the PDU session identifier and the PDU session establishment acception information to the UE via the NAS message.

In a case of determining whether the network supports an augmented reality service or a multi-modal service, the method may further include: the first network element locally executes a decision of the policy and charging rule; or executing PCF selection, determining a virtual reality service rule or a multi-modal service rule based on the selected PCF, or determining a data flow PCC rule for supporting the virtual reality service or the multi-modal service.

In the case where the UE supports an augmented reality service or a multi-modal service, the second network element stores the capability of the UE to support the augmented reality service or the multi-modal service as a PDU session level context in a UE context.

As an example, whether the capability of whether the network supports the augmented reality service is carried in an SM context creation response or an update response, and is sent to the second network element.

In the embodiments of the present invention, the PDU session establishment acception information further includes at least one of the following information: augmented reality service rules or multi-modal service rules; QoS rules that support augmented reality services and multi-modal services.

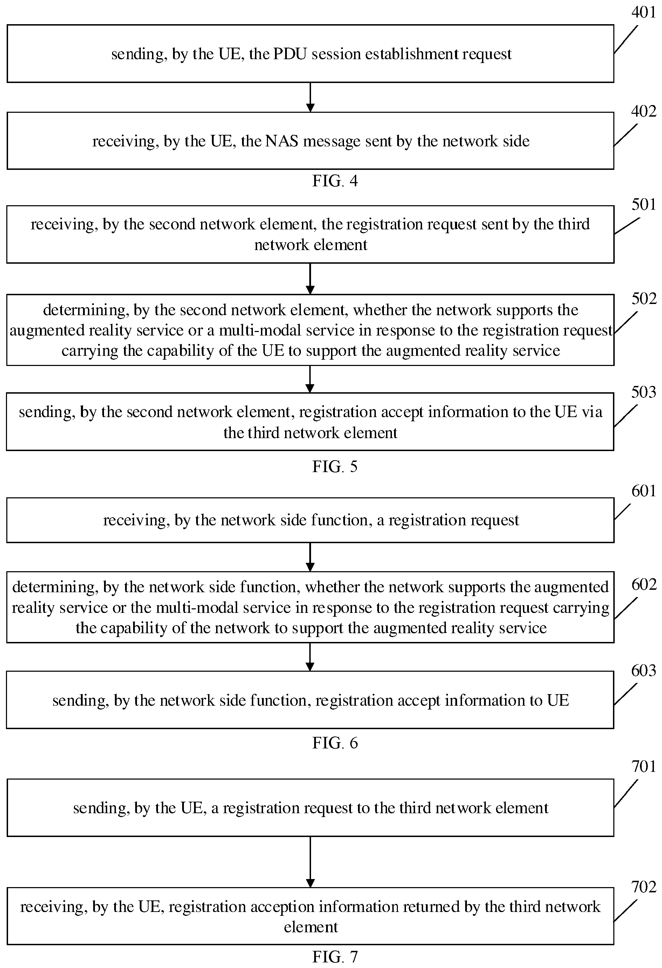

FIG. 4 is a flow chart of a method for negotiating an augmented reality service support capability according to an example embodiment. As shown in FIG. 4, the method for negotiating an augmented reality service support capability according to an embodiment of the present invention is performed by a UE, and includes the following processing steps.

In block 401, the UE sends a PDU session establishment request.

The PDU session establishment request carries a first cell, and the first cell carries the capability of the UE to support the augmented reality service; the first cell includes 5GSM core network capability or PCO.

In block 402, the UE receives the NAS message sent by the network side.

The NAS message carries a response whether the network supports an augmented reality service or a multi-modal service.

FIG. 5 is a flow chart of a method for negotiating an augmented reality service support capability according to an example embodiment, and as shown in FIG. 5, the method for negotiating an augmented reality service capability of an embodiment of the present invention is performed by a second network element, including the following processing steps.

In block 501, the second network element receives a registration request sent by the third network element.

In the embodiments of the present invention, the registration request carries a response whether the augmented reality service or the multi-modal service is supported.

In block 502, in response to the registration request carrying the capability of the UE to support the augmented reality service, the second network element determines whether the network supports the augmented reality service or the multi-modal service.

In an embodiment of the present invention, determining whether a network supports an augmented reality service or a multi-modal service may include: determining whether the network supports an augmented reality service or a multi-modal service according to at least one of subscription information, a network support capability, and a local policy.

In block 503, the second network element sends registration acception information to the UE via the third network element or directly.

The registration acception information carries the capability of whether the network supports the augmented reality service.

In the embodiments of the present invention, message interaction can be executed between a UE and a core network element via a RAN, and the core network element can also directly send relevant messages to the UE for direct communication with the UE.

Based on the foregoing steps, embodiments of the present invention may further include: sending a group identifier of an augmented reality service or a multi-modal service to a UE via a third network element or directly; the group identifier being used to associate a plurality of UEs of an augmented reality service or a multi-modal service group, or a plurality of augmented reality service or multi-modal service sessions of a single UE, or a plurality of data flows of a single UE session, and executing the augmented reality service or the multi-modal service with cooperation of a policy decision and a QoS authorization of the augmented reality service or the multi-modal service of the network side function network element, such as SMF and/or PCF.

FIG. 6 is a flow chart of an augmented reality service capability negotiation method according to an according to an example embodiment, and as shown in FIG. 6, the method for negotiating an augmented reality service support capability of an embodiment of the present invention is performed by a network side function, including the following processing steps.

In block 601, the network side function receives a registration request.

In block 602, in response to the registration request carrying the capability of the network to support the augmented reality service, the network side function determines whether the network supports the augmented reality service or the multi-modal service.

In block 603, the network side function sends registration acception information to the UE.

The registration acception information carries the capability of whether the network supports the augmented reality service.

As an example, the network side function includes a second network element and a third network element, where the second network element includes an AMF, and the third network element includes an access network such as a RAN or AN.

A third network element receives a registration request sent by a UE, and selects a second network element; the registration request carries the capability of whether the UE supports an augmented reality service; the registration request is sent to the selected second network element; the second network element determines whether the network supports an augmented reality service or a multi-modal service, and sends registration acception information to the UE via the third network element; the registration acception information carries the capability of whether the network supports the augmented reality service.

In an embodiment of the present invention, the determining whether a network supports an augmented reality service or a multi-modal service includes: the second network element determining whether the network supports an augmented reality service or a multi-modal service according to at least one of subscription information, a network support capability, and a local policy.

In an embodiment of the present invention, on the basis of the foregoing steps, the method of the embodiments of the present invention may further include: the second network element sending a group identifier of an augmented reality service or a multi-modal service to a UE via a third network element or directly; the group identifier being used to associate a plurality of UEs of an augmented reality service or a multi-modal service group, or a plurality of augmented reality service or multi-modal service sessions of a single UE, or a plurality of data flows of a single UE session.

The augmented reality service or the multi-modal service is executed in cooperation with the policy decision and the QoS authorization of the augmented reality service or the multi-modal service of the cooperated network side functional network such as SMF and/or PCF.

FIG. 7 is a flow chart of a method for negotiating an augmented reality service support capability according to an example embodiment. As shown in FIG. 7, the method for negotiating an augmented reality service support capability according to an embodiment of the present invention is performed by a UE, and includes the following processing steps.

In block 701, the UE sends a registration request to the third network element.

The registration request carries the capability of supporting an augmented reality service.

In block 702, the UE receives registration acception information returned by the third network element.

The registration request carries a response of whether to support an augmented reality service or a multi-modal service.

In the embodiments of the present invention, when a UE receives a group identifier of an augmented reality service or a multi-modal service forwarded by the third network element; the group identifier being used to associate a plurality of UEs of an augmented reality service or a multi-modal service group, or a plurality of augmented reality service or multi-modal service sessions of a single UE, or a plurality of data flows of a single UE session.

In the embodiments of the present invention, on the basis of the foregoing steps, it is also possible to include: the UE storing the received group identifier of the augmented reality service or the multi-modal service; the UE carrying the group identifier of the augmented reality service or the multi-modal service in the PDU session establishment request message sent to the second network element.

In the embodiments of the present invention, the group identifier of the augmented reality service sent by the network side is forwarded through the RAN or directly sent by the network side function.

The nature of the technical solutions of the embodiments of the present invention is further elucidated below in connection with specific examples.

By increasing the capability support and negotiation of the XRM service and the multi-modal service of the UE and the network, the embodiments of the present invention enables the network to correctly identify the capability support of the UE for the XRM service and the multi-modal data and also enables the UE to accurately acquire the corresponding capability support of the network, so as to facilitate the identification and QoS coordination of the XRM service and the multi-modal data supported by the UE and the network.

If both the UE and the 5GC network support the XRM service and the multi-modal service, the execution of the XRM service and the multi-modal service can be guaranteed, for example, the UE requests to establish a XRM and multi-modal session, the network determines to support the function and successfully establishes the session, the UE executes a corresponding service policy provided by the network, and executes QoS association and transmission of a XRM service data flow, so as to satisfy the QoS of the XRM service and the multi-modal service, such as guaranteed flow bit rate (GFBR), packet delay budget (PDB), maximum data burst size (MDBV) matching, etc. of the corresponding XRM and the multi-modal service. Where the service policy includes an XRM rule/a multi-modal service rule, or a data flow PCC rule for associating with the XRM and the multi-modal service, for example, enhancing a UE policy supporting the XRM multi-modal service, etc.

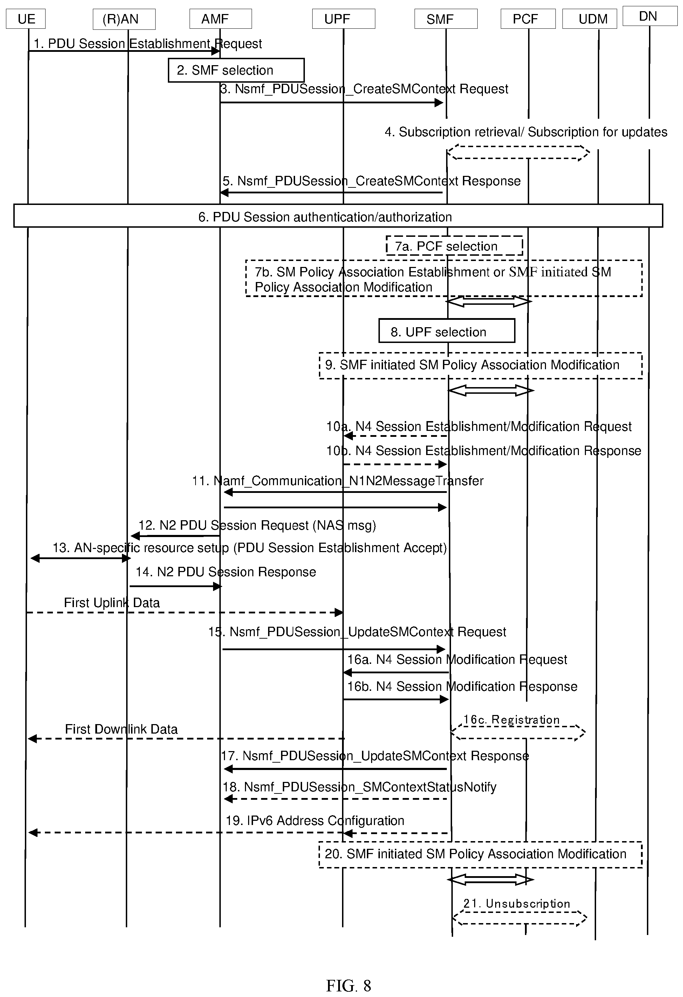

FIG. 8 is a flow chart illustrating a virtual reality service capability negotiation method according to an example embodiment, and as shown in FIG. 8, the virtual reality service capability negotiation method according to an embodiment of the present invention includes the following processing steps.

In step 1, the UE sends a PDU session establishment request to an access and mobility management function (AMF) through a radio access network (RAN) or an access network (AN).

Specifically, the UE sends a Non-Access Stratum (NAS) message to the AMF to initiate a PDU session establishment procedure requested by the UE. An N1 session management container (N1 SM container) carries a PDU session establishment request message; the PDU session establishment request message carries 5GSM capability information; and the 5GSM Capability information includes XRM service/multi-modal service capability. In this way, the UE can inform the network that the UE supports the XRM service/multi-modal service feature.

In step 2, the AMF stores the XRM service/multi-modal service capability supported by the UE as a PDU session level context in the UE context based on the PDU session establishment request message. A corresponding SMF is selected for the PDU session establishment request.

In step 3, the AMF sends an establishment session management (SM) context request message to the selected SMF, where the SM context request message carries the N1 SM container in step 1, and the N1 SM container includes a 5GSM core network capability including a XRM service/a multi-modal service capability.

In step 4, the service management function (SMF) checks the subscription data to retrieve/update the subscription. For example, determining whether the PDU session establishment request complies with the user subscription and local policy, and determining whether the network supports the XRM service/multi-modal service. If not, the PDU session establishment for the XRM service/multi-modal service is rejected, or the session establishment is received based on the local policy but the XRM service/multi-modal service is not supported.

In step 5, the SMF sends to the AMF a message corresponding to establish an SM context or an update response message; if session PDU establishment is rejected, carrying a corresponding rejection reason value; alternatively, if the support of the XRM service/multi-modal service is denied, a corresponding cause value is carried indicating that the 5GC does not support the XRM service/multi-modal service.

In step 6, the core network executes authentication and authentication on the PDU session.

In step 7, if the PDU session uses dynamic policy and charging control (PCC), then the SMF executes PCF selection; executing SM policy association establishment or SMF initiated SM policy association modification with PCF; otherwise, the SMF executes a local policy; the PDU session requests to support a XRM service/multi-modal service, and SMF and PCF generate/activate a corresponding XRM rule/multi-modal data rule according to application information provided by a subscription and an application function (AF), or generate/activate a data flow PCC rule enhanced to support a XRM and multi-modal session, for example, associating a XRM service data flow, associating with a XRM service and a multi-modal service QoS, including GFBR, PDB and MDBV matching of a XRM and a multi-modal service data flow, etc.

In step 8, the SM executes the user plane function (UPF) selection.

In step 9, a SMF initial SM policy association modification is executed.

In step 10, the SMF sends an N4 session establishment/modification request to the PCF; the PCF sends an N4 session establishment/modification response to the SMF.

In step 11, the SMF sends an N1N2 message (Namf_Communication_N1N2MessageTransfer) to the AMF, and the N1 SM container carries PDU session establishment acception information; the Accept carries relevant QoS parameters supporting an XRM service/a multi-modal service; alternatively, the PDU session establishment acception information may also carry a corresponding XRM rule/multi-modal data rule, or a QoS rule for supporting XRM and multi-modal services, for the UE to execute association of a XRM service data flow and execute QoS matching of the XRM and multi-modal data flows.

In step 12, the AMF sends an N2 PDU session request message (a NAS message) to the ^{®}AN, the AMF sends the NAS message to the RAN, and the N2 PDU session request message carries a PDU session ID and a session accept message.

In step 13, the ^{®}AN sends a PDU session establishment accept message to the UE to initiate an access network AN-specific resource setup, and the RAN forwards the NAS message in step 12 to the UE for the UE to execute.

In step 14, the RAN sends an N2 PDU session response message to the AMF. The first uplink data is sent to the UPF.

In step 15, the AMF sends Nsmf_PDUSession_UpdateSMContext Request to SMF.

In step 16, the AMF sends an N4 session Establishment/modification request to the UPF; the UPF sends an N4 session establishment/modification response to the AMF.

AMF initiates registration with UDM.

In step 17, the SMF sends Nsmf_PDUSession_UpdateSMContext Response to AMF.

In step 18, the SMF sends Nsmf_PDUSession_SMContextStatusNotify to AMF.

In step 19, the SMF executes the Ipv6 address configuration for the UE.

In step 20, the UPF initiates a SMF initial SM policy SMF initiated SM Policy Association Modification.

In step 21, unsubscription between SMF and UDP.

In an embodiment of the present invention, the foregoing process can be understood with reference to the session establishment and update process of TS23.502 4.3.2.2.

Referring to the flow shown in FIG. 8, if the UE indicates in a protocol configuration option (PCO) whether the UE supports XRM service capabilities/multi-mode service capabilities in a registration request message, e.g. in an initial registration and mobility registration update as part of the UE 5GMM core network capabilities. Thus, in step 1, the capability of the UE to support the XRM service/multi-mode data service may be included in the PCO of the PDU session establishment request message. The processing of the other steps is the same as the aforementioned processing flow.

In step 11, if the UE indicates that the XRM service/multi-modal data service is supported in the PCO in the PDU session establishment request, and the XRM service/multi-mode data service is enabled for the PDU session, then SMF notifies UE XRM via AMF that the service/multi-modal data service is enabled in PCO in the PDU session establishment accept. That is, the SMF may provide the XRM Service/Multimodal Data Service Configuration Information to the UE in the PCO.

SMF negotiates XRM business/multi-mode data service support with PCF. If the PCF supports the XRM service/multi-mode data service and accepts it, the SMF indicates to the UE in the PCO that the XRM service/multi-mode data service can be used.

The XRM/multi-modal capability, as a 5GMM core network capability, can also be provided to a network in a UE registration process, and the network can execute group association of a plurality of UEs corresponding to the XRM/multi-modal service, or multi-session group association within a single UE, or QoS association between a plurality of data flows of a session within a single UE, and coordinate policy decision and QoS authorization of the XRM/multi-modal service so as to support the execution of the XRM/multi-modal service.

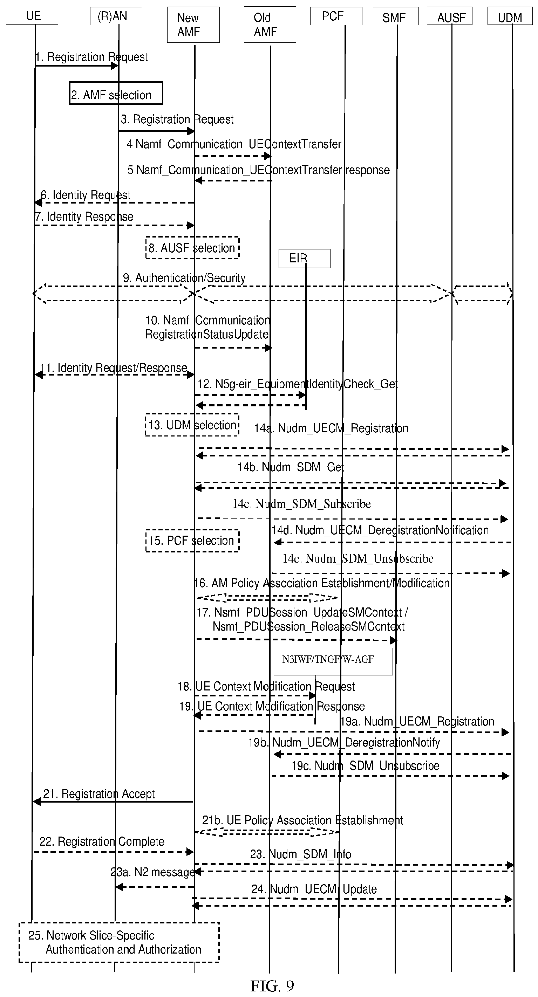

FIG. 9 is a flow chart illustrating a virtual reality service capability negotiation method according to an example embodiment, and as shown in FIG. 9, the virtual reality service capability negotiation method according to an embodiment of the present invention includes the following processing steps.

Step 1, the UE sends a registration request message to the ^{®}AN, where the registration request message carries UE mobility management core network capability (MM core network capability) information, and the UE MM core network capability includes the capability support of the XRM service/multi-modal service.

In step 2, the ^{®}AN selects a corresponding AMF for the UE.

In step 3, the ^{®}AN sends a registration request of the UE to the AMF via an N2 message, where the N2 message carries information about the registration request in step 1. The AMF stores the corresponding UE MM core network capability in the UE context.

If the UE provides the XRM service/multi-modal service capability support in step 1, the AMF decides whether to support the XRM service/multi-modal service according to information decisions such as subscription information, a network support capability, and a local policy.

In step 4, the newly selected AMF sends a Namf_Communication_UEContextTransfer to the old AMF.

In step 5, the old AMF sends a Namf_Communication_UEContextTransfer Response to the new AMF.

In step 6, the new AMF sends an identity request to the UE.

In step 7, the UE sends an identity response to the new AMF.

In step 8, the new AMF makes an AUSF selection.

In step 9, the network side executes Authentication/Security authentication on the UE.

In step 10, the new AMF sends a Namf_Communication_Registration Status Update to the old AMF.

In step 11, an identity request/response is executed between the new AMF and the UE.

In step 12, the new AMF sends N5g-eir_Equipment Identity Check_Get to EIR.

In step 13, the new AMF makes a UDM selection.

In step 14, Nudm_UECM_Registration, nudm_SDM_Get and Nudm_SDM_Subscribe are executed between the new AMF and the core network.

The core network sends Nudm_UECM_Deregistration Notification to the old AMF, and the old AMF sends Nudm_SDM_Unsubscribe to the core network.

In step 15, the new AMF makes a PCF selection.

In step 16, the AM policy Association Establishment/Modification is executed between the new AMF and the selected PCF.

In step 17, the new AMF sends Nsmf_PDUSession_UpdateSMContext/Nsmf_PDUSession_ReleaseSMContext to SMF.

In step 18, the new AMF sends a UE Context Modification Request to the N3IWF/TNGF/W_AGF.

In step 19, the N3IWF/TNGF/W_AGF sends a send UE Context Modification Response to the new AMF.

The new AMF sends Nudm_UECM_Registration to the UDM and receives Nudm_UECM_DeregistrationNotify sent by the UDM, and the new AMF sends Nudm_SDM_Unsubscribe to the UDM.

In step 21, the new AMF sends a registration accept to the UE.

UE Policy Association Establishment is executed between the new AMF and the PCF.

In step 22, the UE sends a registration complete message to the new AMF.

In step 23, the new AMF sends a Nudm_SDM_Info to the UDM, and the UDM sends an N2 message to the new AMF.

In step 24, Nudm_UECM_Update is executed between the new AMF and the UDM.

In step 25, network Slice-Specific Authentication and Authorization is executed between the new AMF and the UE.

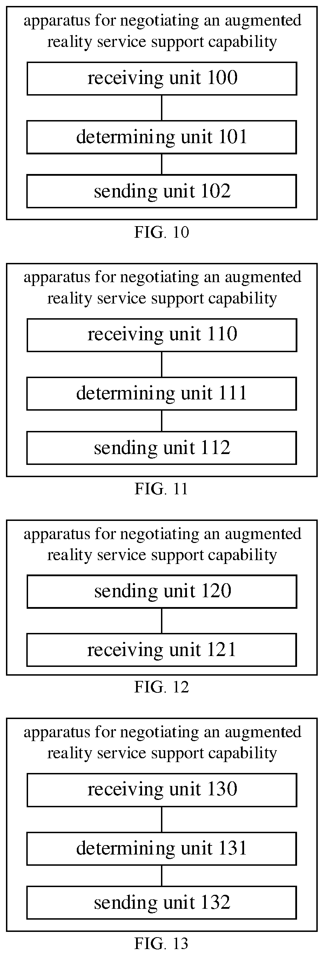

FIG. 10 is a schematic diagram illustrating a component structure of an apparatus for negotiating an augmented reality service support capability according to an example embodiment. As shown in FIG. 10, the augmented reality service capability negotiation apparatus according to an embodiment of the present invention includes: a receiving unit 100 configured to receive an SM context creation request; where the SM context creation request carries a first cell, and the first cell carries the capability of a user equipment (UE) to support the augmented reality service; a determining unit 101 configured to determine whether the network supports an augmented reality service; a sending unit 102 configured to send a response to the second network element whether the network supports the augmented reality service.

In an embodiment of the present invention, the first network element includes SMF, etc.

As an implementation, the first cell includes a 5GSM core network capability, or a protocol configuration option PCO.

The determining unit 101 is further configured to determine and judge whether the network supports the augmented reality service of the PDU session according to at least one of subscription information, a network support capability, and a local policy.

As an implementation, the capability of whether the network supports the augmented reality service is carried in an SM context creation response or an update response and is sent to the second network element.

On the basis of the apparatus for negotiating the augmented reality service support capability shown in FIG. 10, the apparatus further includes: a policy execution unit (not shown in FIG. 10) configured to locally execute a decision of the policy and charging rule in response to the network supporting an augmented reality service; or executing a policy control function PCF selection; based on the selected PCF, an augmented reality service rule or a multi-modal service rule is determined, or a data flow PCC rule for supporting an augmented reality service is determined.

As an implementation, the sending unit 102 is further configured to: send protocol data unit (PDU) session establishment acception information to the second network element; the PDU session establishment acception information carries a quality of service (QoS) parameter for supporting an augmented reality service or a multi-modal service.

In an example embodiment, the receiving unit 100, the determining unit 101, the sending unit 102, the policy execution unit, etc. may be implemented by one or more of a central processing unit (CPU), a graphics processing unit (GPU), a base processor (BP), an application specific integrated circuit (ASIC), a digital signal processor (DSP), a programmable logic device (PLD), a complex programmable logic device (CPLD), a field-programmable gate array (FPGA), general-purpose processor, a controller, a micro controller unit (MCU), a microprocessor, or other electronic component implementations may also be implemented in conjunction with one or more radio frequency (RF) antennas to execute the steps of the method for negotiating an augmented reality service support capability of the preceding embodiments.

In the embodiments of the present invention, the specific manner in which the various elements of the apparatus shown in FIG. 10 execute operations has been described in detail in connection with embodiments of the method and will not be described in detail herein.

FIG. 11 is a schematic diagram illustrating a component structure of an apparatus for negotiating an augmented reality service support capability according to an example embodiment. As shown in FIG. 11, the augmented reality service capability negotiation apparatus according to an embodiment of the present invention includes: a receiving unit 110 configured to receive a PDU session establishment request sent by a UE; a determining unit 111 configured to determine whether the network supports an augmented reality service or a multi-modal service in a session establishment process in response to the session establishment request information carrying the capability of the UE to support the augmented reality service; a sending unit 112 configured to send a non-access stratum (NAS) message to the UE, where the NAS message carries a response of whether to support the augmented reality service or a multi-modal service.

As an implementation method, the session establishment request information carrying the capability of the UE to support the augmented reality service includes: the session establishment request carries a 5GSM core network capability, and the 5GSM core network capability contains the capability of the UE to support the augmented reality service.

As an implementation method, the session establishment request information carrying the capability of the UE to support the augmented reality service includes: the session establishment request carries a PCO, and the PCO includes the capability of the UE to support the augmented reality service.

In an example embodiment, the receiving unit 110, the determining unit 111, the sending unit 112, etc. may be implemented by one or more of a central processing unit (CPU), a graphics processing unit (GPU), a base processor (BP), an application specific integrated circuit (ASIC), a digital signal processor (DSP), a programmable logic device (PLD), a complex programmable logic device (CPLD), a field-programmable gate array (FPGA), a general-purpose processor, a controller, a micro controller unit (MCU), a microprocessor, or other electronic component implementations may also be implemented in conjunction with one or more radio frequency (RF) antennas to execute the steps of the method for negotiating an augmented reality service support capability of the preceding embodiments.

In the embodiments of the present invention, the specific manner in which the various elements of the apparatus shown in FIG. 11 execute operations has been described in detail in connection with embodiments of the method and will not be described in detail herein.

FIG. 12 is a schematic diagram illustrating a component structure of an apparatus for negotiating an augmented reality service support capability according to an example embodiment. As shown in FIG. 12, the augmented reality service capability negotiation apparatus according to an embodiment of the present invention includes: a sending unit 120 configured to send a PDU session establishment request; the PDU session establishment request carries a first cell, and the first cell carries the capability of the UE to support the augmented reality service; and a receiving unit 121 configured to receive the NAS message sent by the network side, where the response of whether the augmented reality service or the multi-modal service is supported is carried.

The first cell includes a 5GSM core network capability or a PCO.

In an example embodiment, the sending unit 120, the receiving unit 121, etc. may be implemented by one or more of a central processing unit (CPU), a graphics processing unit (GPU), a base processor (BP), an application specific integrated circuit (ASIC), a digital signal processor (DSP), a programmable logic device (PLD), a complex programmable logic device (CPLD), a field-programmable gate array (FPGA), a general-purpose processor, a controller, a micro controller unit (MCU), a microprocessor, or other electronic component implementations may also be implemented in conjunction with one or more radio frequency (RF) antennas to execute the steps of the method for negotiating an augmented reality service support capability of the preceding embodiments.

In the embodiments of the present invention, the specific manner in which the various elements of the apparatus shown in FIG. 12 execute operations has been described in detail in connection with embodiments of the method and will not be described in detail herein.

FIG. 13 is a schematic diagram illustrating a component structure of an apparatus for negotiating an augmented reality service support capability according to an example embodiment. As shown in FIG. 13, the augmented reality service capability negotiation apparatus according to an embodiment of the present invention includes: a receiving unit 130 configured to receive a registration request sent by a third network element; a determining unit 131 configured to determine whether the network supports an augmented reality service or a multi-modal service in response to the registration request carrying the capability of the UE to support the augmented reality service; a sending unit 132 configured to send registration acception information to the UE via the third network element, where the registration request carries a response of whether the augmented reality service or the multi-modal service is supported.

As an implementation, the determining unit 131 is further configured to: determine whether the network supports an augmented reality service or a multi-modal service according to at least one of subscription information, a network support capability, and a local policy.

As an implementation, the sending unit 132 is further configured to: send a group identifier of an augmented reality service or a multi-modal service to a UE via a third network element; the group identifier being used to associate a plurality of UEs of an augmented reality service or a multi-modal service group, or a plurality of augmented reality service or multi-modal service sessions of a single UE, or a plurality of data flows of a single UE session, and execute augmented reality services or multi-modal services with cooperation of a policy decision and a QoS authorization for augmented reality services or multi-modal services.

In an example embodiment, the sending unit 130, the determining unit 131, the receiving unit 132, etc. may be implemented by one or more of a central processing unit (CPU), a graphics processing unit (GPU), a base processor (BP), an application specific integrated circuit (ASIC), a digital signal processor (DSP), programmable logic device (PLD), a complex programmable logic device (CPLD), a field-programmable gate array (FPGA), a general-purpose processor, a controller, a micro controller unit (MCU), a microprocessor, or other electronic component implementations may also be implemented in conjunction with one or more radio frequency (RF) antennas to execute the steps of the method for negotiating an augmented reality service support capability of the preceding embodiments.

In the embodiments of the present invention, the specific manner in which the various elements of the apparatus shown in FIG. 13 execute operations has been described in detail in connection with embodiments of the method and will not be described in detail herein.

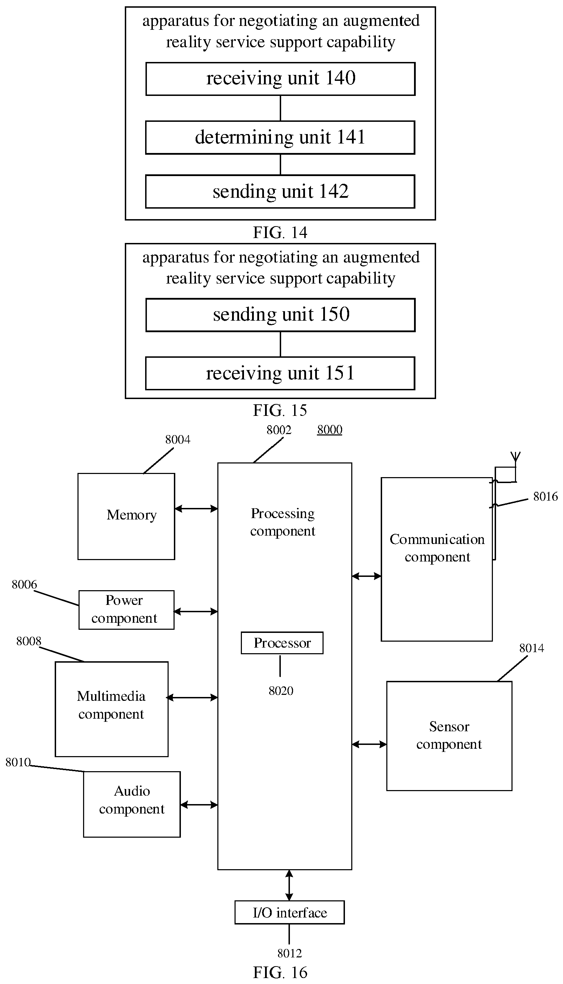

FIG. 14 is a schematic diagram illustrating a component structure of an apparatus for negotiating an augmented reality service support capability according to an example embodiment. As shown in FIG. 14, the augmented reality service capability negotiation apparatus according to an embodiment of the present invention includes: a receiving unit 140 configured to receive a registration request; a determining unit 141 configured to determine whether the network supports an augmented reality service or a multi-modal service in response to the registration request carrying the capability of whether the network supports the augmented reality service; and a sending unit 142 configured to send registration acception information to the UE, carrying the capability of supporting the augmented reality service.

In an example embodiment, the receiving unit 140, the determining unit 141, the sending unit 142, etc. may be implemented by one or more of a central processing unit (CPU), a graphics processing unit (GPU), a base processor (BP), an application specific integrated circuit (ASIC), a digital signal processor (DSP), a programmable logic device (PLD), a complex programmable logic device (CPLD), a field-programmable gate array (FPGA), a general-purpose processor, a controller, a micro controller unit (MCU), a microprocessor, or other electronic component implementations may also be implemented in conjunction with one or more radio frequency (RF) antennas to execute the steps of the method for negotiating an augmented reality service support capability of the preceding embodiments.

In the embodiments of the present invention, the specific manner in which the various elements of the apparatus shown in FIG. 14 execute operations has been described in detail in connection with embodiments of the method and will not be described in detail herein.

FIG. 15 is a schematic diagram illustrating a component structure of an apparatus for negotiating an augmented reality service support capability according to an example embodiment. As shown in FIG. 15, the augmented reality service capability negotiation apparatus according to an embodiment of the present invention includes: a sending unit 150 configured to send a registration request to a third network element, where the registration request carries the capability of supporting an augmented reality service; and a receiving unit 151 configured to receive registration acception information returned by the third network element, where the registration request carries a response of whether to support an augmented reality service or a multi-modal service.

As an implementation, the receiving unit 151 is further configured to: receive a group identifier of an augmented reality service or a multi-modal service forwarded by the third network element; use the group identifier for associating a plurality of UEs of an augmented reality service or a multi-modal service group, or for associating a plurality of augmented reality services or multi-modal service sessions of a single UE, or for associating a plurality of data flows of a single UE session; and execute augmented reality services or multi-modal services with cooperation of a policy decision and a QoS authorization for augmented reality services or multi-modal services.

In an example embodiment, the sending unit 150, the receiving unit 151, etc. may be implemented by one or more of a central processing unit (CPU), a graphics processing unit (GPU), a base processor (BP), an application specific integrated circuit (ASIC), a digital signal processor (DSP), a programmable logic device (PLD), a complex programmable logic device (CPLD), a field-programmable gate array (FPGA), a general-purpose processor, a controller, a micro controller unit (MCU), a microprocessor, or other electronic component implementations may also be implemented in conjunction with one or more radio frequency (RF) antennas to execute the steps of the method for negotiating an augmented reality service support capability of the preceding embodiments.

In the embodiments of the present invention, the specific manner in which the various elements of the apparatus shown in FIG. 15 execute operations has been described in detail in connection with embodiments of the method and will not be described in detail herein.

FIG. 16 is a block diagram of a user equipment 8000, according to an example embodiment. For example, the user equipment 8000 may be a mobile phone, a computer, a digital broadcast terminal, a messaging device, a game console, a tablet device, a medical device, an exercise device, a personal digital assistant, etc.

Referring to FIG. 16, the user equipment 8000 may include one or more of the following cells: a processing cell 8002, a memory 8004, a power cell 8006, a multimedia cell 8008, an audio cell 8010, an input/output (I/O) interface 8012, a sensor cell 8014, and a communication cell 8016.

The processing cell 8002 typically controls the overall operation of the user equipment 8000, such as operations associated with display, telephone calls, data communications, camera operations, and recording operations. Processing cell 8002 may include one or more processors 8020 to execute instructions to execute all or part of the steps of the method for negotiating an augmented reality service support capability described above. Further, processing cell 8002 may include one or more modules to facilitate interaction between processing cell 8002 and other cells. For example, processing cell 8002 may include a multimedia module to facilitate interaction between multimedia cell 8008 and processing cell 8002.

Memory 8004 is configured to store various types of data to support operation at equipment 8000. Examples of such data include instructions for any application or method operating on user equipment 8000, contact data, phonebook data, messages, pictures, videos, etc. The memory 8004 may be implemented by any type or combination of volatile and non-volatile memory devices, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disks.

The power cell 8006 provides power to the various cells of the user equipment 8000. The power cells 8006 may include a power management system, one or more power sources, and other cells associated with generating, managing, and distributing power for the user equipment 8000.

The multimedia cell 8008 includes a screen providing an output interface between the user equipment 8000 and the user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touches, slides, and gestures on the touch panel. Touch sensors may not only sense the boundaries of a touch or slide action but also detect the duration and pressure associated with the touch or slide operation. In some embodiments, the multimedia cell 8008 includes a front camera and/or a back camera. When the equipment 8000 is in an operation mode, such as a photographing mode or a video mode, the front camera and/or the rear camera may receive external multimedia data. Each of the front camera and the rear camera may be a fixed optical lens system or have a focal length and an optical zoom capability.

The audio cell 8010 is configured to output and/or input audio signals. For example, the audio cell 8010 includes a MIC configured to receive external audio signals when the user equipment 8000 is in an operating mode, such as a calling mode, a recording mode, and a speech recognition mode. The received audio signal may be further stored in memory 8004 or sent via communication cell 8016. In some embodiments, the audio cell 8010 further includes a speaker for outputting an audio signal.

I/O interface 8012 provides an interface between processing cells 8002 and peripheral interface modules, which may be keyboards, click wheels, buttons, etc. These buttons may include, but are not limited to: home button, volume button, start button, and lock button.

The sensor cell 8014 includes one or more sensors for providing the user equipment 8000 with an assessment of the status of various aspects. For example, the sensor cell 8014 may detect the on/off state of the device 8000, and the relative locating of the cells, such as the display and keypad of the user equipment 8000, the sensor cell 8014 may also detect changes in the position of the user equipment 8000 or one of the cells in the user equipment 8000, the presence or absence of user contact with the user equipment 8000, the orientation or acceleration/deceleration of the user equipment 8000, and temperature changes of the user equipment 8000. The sensor cell 8014 may include a proximity sensor configured to detect the presence of a nearby object in the absence of any physical contact. The sensor cell 8014 may also include a light sensor, such as a CMOS or CCD image sensor, for use in imaging applications. In some embodiments, the sensor cell 8014 may also include an acceleration sensor, a gyroscope sensor, a magnetic sensor, a pressure sensor, or a temperature sensor.

The communication cell 8016 is configured to facilitate wired or wireless communication between the user equipment 8000 and other devices. The user equipment 8000 may access a wireless network based on a communication standard, such as Wi-Fi, 2G or 3G, or a combination thereof. In one example embodiment, the communication cell 8016 receives a broadcast signal or broadcast-related information from an external broadcast management system via a broadcast channel. In one example embodiment, communication cell 8016 also includes a near-field communication (NFC) module to facilitate short-range communication. For example, the NFC module may be implemented based on RFID technology, IrDA technology, UWB technology, (BT) technology, and other technologies.

In an example embodiment, user equipment 8000 may be implemented by one or more an application-specific integrated circuit (ASIC), a digital signal processor (DSP), a digital signal processing device (DSPD), a programmable logic device (PLD), a field programmable gate array (FPGA), a controller, a micro-controller, a microprocessor, or other electronic components for executing the steps of the method for negotiating an augmented reality service support capability described above.

In an example embodiment, there is also provided a non-transitory computer-readable storage medium including instructions, such as a memory 8004 including instructions executable by a processor 8020 of user equipment 8000 to execute the steps of the method for negotiating an augmented reality service support capability described above. For example, the non-transitory computer-readable storage medium may be an ROM, a random access memory (RAM), a CD-ROM, a magnetic tape, a floppy disk, an optical data storage equipment, etc.

The embodiments of the present invention also provide a first network element, including a processor, a transceiver, a memory, and an executable program stored on the memory and capable of being run by the processor, and the processor, when running the executable program, executes the steps of the method for negotiating an augmented reality service support capability of the preceding embodiments.

The embodiments of the present invention also provide a second network element, including a processor, a transceiver, a memory, and an executable program stored on the memory and capable of being run by the processor, and the processor, when running the executable program, executes the steps of the method for negotiating an augmented reality service support capability of the preceding embodiments.

The embodiments of the present invention also recite a terminal, including a processor, a transceiver, a memory, and an executable program stored on the memory and capable of being run by the processor, the processor running the executable program to execute the steps of the method for negotiating an augmented reality service support capability of the preceding embodiments.

The embodiments of the present invention also describe a storage medium having an executable program stored thereon, the executable program being performed by a processor to execute the steps of the method for negotiating an augmented reality service support capability of the preceding embodiments.

Other embodiments of the embodiments of the invention will be apparent to those skilled in the art from consideration of the specification and practice of the invention disclosed herein.

It is to be understood that the embodiments of the invention are not limited to the precise arrangements described above and shown in the drawings. The scope of embodiments of the present invention is limited only by the appended claims.

## Claims

1. A method for negotiating an augmented reality service support capability, performed by a first network element, the method comprising:
receiving (201) a session management, SM, context creation request, and determining whether a network supports an augmented reality service; and
sending (202) to a second network element a response indicating whether the network supports the augmented reality service;
wherein the SM context creation request carries a first cell, and the first cell carries a capability of a user equipment, UE, to support the augmented reality service.

2. The method of claim 1, further comprising:
determining whether the network supports the augmented reality service of a protocol data unit, PDU, session according to at least one of subscription information, a network support capability, and a local policy.

3. The method of claim 1 or 2, wherein a capability of whether the network supports the augmented reality service is carried in an SM context creation response or an update response and is sent to the second network element.

4. The method of any one of claims 1 to 3, wherein in response to the network supporting the augmented reality service, the method further comprises:
locally executing a decision of a policy and charging rule; or
executing a policy control function, PCF, selection; based on a selected PCF, determining an augmented reality service rule, or determining a data flow policy and charging control, PCC, rule for supporting the augmented reality service.

5. The method of any one of claims 1 to 4, further comprising:
sending a protocol data unit, PDU, session establishment acception information to the second network element, wherein the PDU session establishment acception information carries a quality of service, QoS, parameter for supporting the augmented reality service.

6. A method for negotiating an augmented reality service support capability, performed by a network side function which comprises a first network element and a second network element, the method comprising:
receiving (301), by the second network element, a protocol data unit, PDU, session establishment request sent by a user equipment, UE,
determining (302), by the first network element, whether a network supports an augmented reality service in a session establishment process in response to session establishment request information carrying a capability of the UE to support the augmented reality service, and
sending (303), by the second network element, a non-access stratum, NAS, message to the UE, wherein the NAS message carries a response of whether to support the augmented reality service.

7. The method of claim 6, wherein
the session establishment request information carrying the capability of the UE to support the augmented reality service comprises: the session establishment request carrying at least one of a 5^{th} generation session management, 5GSM, core network capability or a protocol configuration option, PCO, the 5GSM core network capability comprising the capability of the UE to support the augmented reality service, and the PCO comprising the capability of the UE to support the augmented reality service.

8. The method of claim 6, wherein
the first network element is configured to perform a step of the method of any one of claims 1-2, and 4-5.

9. The method of any one of claims 6-8, wherein
the second network element is configured to receive the PDU session establishment request sent by the UE, select the first network element based on the PDU session establishment request, and send an SM context creation request to the selected first network element; the SM context request carries the capability of the UE to support the augmented reality service; and
after receiving PDU session establishment acception information returned by the first network element, the second network element is configured to send a PDU session identifier and the PDU session establishment acception information to the UE via the NAS message;
optionally the second network element is configured to store the capability of the UE to support the augmented reality service as a PDU session level context in a UE context.

10. A method for negotiating an augmented reality service support capability, performed by a user equipment, UE, the method comprising:
sending (401) a protocol data unit, PDU, session establishment request, wherein the PDU session establishment request carries a first cell, and the first cell carries a capability of the UE to support an augmented reality service;
receiving (402) a non-access stratum, NAS, message sent by a network side, wherein the NAS message carries a response of whether the network supports an augmented reality service.

11. The method of any one of claims 1-10, wherein the first cell comprises a 5^{th} generation session management, 5GSM, core network capability or a protocol configuration option, PCO.

12. A method for negotiating an augmented reality service support capability, performed by a second network element, the method comprising:
receiving (501) a registration request from a user equipment, UE,
determining (502), by the second network element, whether a network supports an augmented reality service in response to the registration request carrying a capability of the UE to support the augmented reality service, and
sending registration acception information to the UE, wherein the registration acception information carries a response of whether to support the augmented reality service.

13. The method of claim 12, wherein determining whether the network supports the augmented reality service comprises:
determining whether the network supports the augmented reality service according to at least one of subscription information, a network support capability, and a local policy;
optionally the method further comprises:
sending a group identifier of an augmented reality service to the UE through a third network element or directly, wherein the group identifier is used to associate a plurality of UEs of an augmented reality service group, or associate a plurality of augmented reality service sessions of a single UE, or associate a plurality of data flows of a single UE session.

14. A method for negotiating an augmented reality service support capability, performed by a network side function which comprises a second network element and a third network element, the method comprising:
receiving (601), by the third network element , a registration request from a user equipment, UE,
determining (602), by the second network element, whether a network supports an augmented reality service in response to the registration request carrying a network augmented reality service support capability, and
sending (603), by the third network element, registration acception information to the UE, wherein the registration acception information carries a response of whether to support the augmented reality service.

15. A method for negotiating an augmented reality service support capability, performed by a user equipment, UE, the method comprising:
sending (701) a registration request to a third network element, wherein the registration request carries a capability of supporting an augmented reality service; and
receiving (702) registration acception information returned by the third network element, wherein the registration acception information carries a response of whether to support the augmented reality service.

## Patentansprüche

1. Ein Verfahren zum Aushandeln einer Augmented-Reality-Dienstunterstützungsfähigkeit, das von einem ersten Netzwerkelement durchgeführt wird, wobei das Verfahren folgende Schritte aufweist:
Empfangen (201) einer Sitzungsverwaltungs-, SM-, Kontexterzeugungsanforderung und Bestimmen, ob ein Netzwerk einen Augmented-Reality-Dienst unterstützt; und
Senden (202) einer Antwort an ein zweites Netzwerkelement, die angibt, ob das Netzwerk den Augmented-Reality-Dienst unterstützt;
wobei die SM-Kontexterzeugungsanforderung eine erste Zelle trägt und die erste Zelle eine Fähigkeit eines Nutzergeräts, UE, zum Unterstützen des Augmented-Reality-Dienstes trägt.

2. Verfahren nach Anspruch 1, das ferner folgende Schritte aufweist:
Bestimmen, ob das Netzwerk den Augmented-Reality-Dienst einer Protokolldateneinheits-, PDU-, Sitzung unterstützt, gemäß zumindest einem von Teilnahmeinformationen, einer Netzwerkunterstützungsfähigkeit und einer lokalen Richtlinie.

3. Verfahren nach Anspruch 1 oder 2, wobei eine Fähigkeit, ob das Netzwerk den Augmented-Reality-Dienst unterstützt, in einer SM-Kontexterzeugungsantwort oder einer Aktualisierungsantwort getragen wird und an das zweite Netzwerkelement gesendet wird.

4. Verfahren nach einem der Ansprüche 1 bis 3, wobei ansprechend darauf, dass das Netzwerk den Augmented-Reality-Dienst unterstützt, das Verfahren ferner folgende Schritte aufweist:
lokales Ausführen einer Entscheidung einer Richtlinien- und Abrechnungsregel; oder
Ausführen einer Richtliniensteuerungsfunktion- PCF-, Auswahl; basierend auf einer ausgewählten PCF, Bestimmen einer Augmented-Reality-Dienstregel oder Bestimmen einer Datenflussrichtlinien- und Abrechnungssteuerungs-, PCC-, Regel zum Unterstützen des Augmented-Reality-Dienstes.

5. Das Verfahren gemäß einem der Ansprüche 1 bis 4, das ferner folgende Schritte aufweist:
Senden einer Protokolldateneinheits-, PDU-, Sitzungseinrichtungsannahmeinformation an das zweite Netzwerkelement, wobei die PDU-Sitzungseinrichtungsannahmeinformation einen Dienstgüte-, QoS-, Parameter zum Unterstützen des Augmented-Reality-Dienstes trägt.

6. Ein Verfahren zum Aushandeln einer Augmented-Reality-Dienstunterstützungsfähigkeit, das von einer netzwerkseitigen Funktion durchgeführt wird, die ein erstes Netzwerkelement und ein zweites Netzwerkelement aufweist, wobei das Verfahren folgende Schritte aufweist:
Empfangen (301), durch das zweite Netzwerkelement, einer Protokolldateneinheits, PDU-, Sitzungseinrichtungsanforderung, die von einem Nutzergerät, UE, gesendet wird,
Bestimmen (302), durch das erste Netzwerkelement, ob ein Netzwerk einen Augmented-Reality-Dienst in einem Sitzungseinrichtungsprozess unterstützt, ansprechend auf Sitzungseinrichtungsanforderungsinformationen, die eine Fähigkeit des UE, den Augmented-Reality-Dienstes zu unterstützen, trägt, und
Senden (303), durch das zweite Netzwerkelement, einer Nicht-Zugriffsschicht-, NAS-, Mitteilung an das UE, wobei die NAS-Mitteilung eine Antwort trägt, ob der Augmented-Reality-Dienst unterstützt werden soll.

7. Das Verfahren gemäß Anspruch 6, wobei
die Sitzungseinrichtungsanforderungsinformationen, die die Fähigkeit des UE, den Augmented-Reality-Dienst zu unterstützen, tragen, folgende Merkmale aufweisen: die Sitzungseinrichtungsanforderung, die eine Sitzungsverwaltungs-, 5GSM-, Kernnetzwerkfähigkeit der 5. Generation und/oder eine Protokollkonfigurationsoption, PCO, trägt, wobei die 5GSM-Kernnetzwerkfähigkeit die Fähigkeit des UE, den Augmented-Reality-Dienst zu unterstützen, aufweist und die PCO die Fähigkeit des UE, den Augmented-Reality-Dienst zu unterstützen, aufweist.

8. Das Verfahren gemäß Anspruch 6, wobei
das erste Netzwerkelement dazu konfiguriert ist, einen Schritt des Verfahrens gemäß einem der Ansprüche 1-2 und 4-5 durchzuführen.

9. Das Verfahren gemäß einem der Ansprüche 6-8, wobei
das zweite Netzwerkelement dazu konfiguriert ist, die PDU-Sitzungseinrichtungsanforderung, die von dem UE gesendet wird, zu empfangen, das erste Netzwerkelement basierend auf der PDU-Sitzungseinrichtungsanforderung auszuwählen und eine SM-Kontexterzeugungsanforderung an das ausgewählte erste Netzwerkelement zu senden; die SM-Kontextanforderung die Fähigkeit des UE, den Augmented-Reality-Dienst zu unterstützen, trägt; und
nach dem Empfangen von PDU-Sitzungseinrichtungsannahmeinformation, die von dem ersten Netzwerkelement zurückgegeben wird, das zweite Netzwerkelement dazu konfiguriert ist, eine PDU-Sitzungskennung und die PDU-Sitzungseinrichtungsannahmeinformation über die NAS-Mitteilung an das UE zu senden;
optional das zweite Netzwerkelement dazu konfiguriert ist, die Fähigkeit des UE, den Augmented-Reality-Dienst zu unterstützen, als einen PDU-Sitzungsebenenkontext in einem UE-Kontext zu speichern.

10. Ein Verfahren zum Aushandeln einer Augmented-Reality-Dienstunterstützungsfähigkeit, das von einem Benutzergerät, UE, durchgeführt wird, wobei das Verfahren folgende Schritte aufweist:
Senden (401) einer Protokolldateneinheits-, PDU-, Sitzungseinrichtungsanforderung, wobei die PDU-Sitzungseinrichtungsanforderung eine erste Zelle trägt und die erste Zelle eine Fähigkeit des UE, einen Augmented-Reality-Dienst zu unterstützen, trägt;
Empfangen (402) einer Nicht-Zugriffsschicht-, NAS-, Mitteilung, die von einer Netzwerkseite gesendet wird, wobei die NAS-Mitteilung eine Antwort trägt, ob das Netzwerk einen Augmented-Reality-Dienst unterstützt.

11. Verfahren nach einem der Ansprüche 1 bis 10, wobei die erste Zelle eine Sitzungsverwaltungs-, 5GSM-, Kernnetzwerkfähigkeit der 5. Generation oder eine Protokollkonfigurationsoption, PCO, aufweist.

12. Ein Verfahren zum Aushandeln einer Augmented-Reality-Dienstunterstützungsfähigkeit, das von einem zweiten Netzwerkelement durchgeführt wird, wobei das Verfahren folgende Schritte aufweist:
Empfangen (501) einer Registrierungsanforderung von einem Nutzergerät, UE,
Bestimmen (502), durch das zweite Netzwerkelement, ob ein Netzwerk einen Augmented-Reality-Dienst unterstützt, ansprechend auf die Registrierungsanforderung, die eine Fähigkeit des UE, den Augmented-Reality-Dienst zu unterstützen, trägt, und
Senden einer Registrierungsannahmeinformation an das UE, wobei die Registrierungsannahmeinformation eine Antwort trägt, ob der Augmented-Reality-Dienst unterstützt werden soll.

13. Verfahren nach Anspruch 12, wobei das Bestimmen, ob das Netzwerk den Augmented-Reality-Dienst unterstützt, folgende Schritte aufweist:
Bestimmen, ob das Netzwerk den Augmented-Reality-Dienst unterstützt, gemäß zumindest einem von Teilnahmeinformationen, einer Netzwerkunterstützungsfähigkeit und einer lokalen Richtlinie;
optional das Verfahren ferner folgende Schritte aufweist:
Senden einer Gruppenkennung eines Augmented-Reality-Dienstes an das UE über ein drittes Netzwerkelement oder direkt, wobei die Gruppenkennung dazu verwendet wird, eine Mehrzahl von UEs einer Augmented-Reality-Dienstgruppe zuzuordnen oder eine Mehrzahl von Augmented-Reality-Dienstsitzungen eines einzelnen UE zuzuordnen oder eine Mehrzahl von Datenflüssen einer einzelnen UE-Sitzung zuzuordnen.

14. Ein Verfahren zum Aushandeln einer Augmented-Reality-Dienstunterstützungsfähigkeit, das von einer netzwerkseitigen Funktion durchgeführt wird, die ein zweites Netzwerkelement und ein drittes Netzwerkelement aufweist, wobei das Verfahren folgende Schritte aufweist:
Empfangen (601), durch das dritte Netzwerkelement, einer Registrierungsanforderung von einem Nutzergerät, UE,
Bestimmen (602), durch das zweite Netzwerkelement, ob ein Netzwerk einen Augmented-Reality-Dienst unterstützt, ansprechend auf die Registrierungsanforderung, die eine Netzwerk-Augmented-Reality-Dienstunterstützungsfähigkeit trägt, und
Senden (603), durch das dritte Netzwerkelement, einer Registrierungsannahmeinformation an das UE, wobei die Registrierungsannahmeinformation eine Antwort trägt, ob der Augmented-Reality-Dienst unterstützt werden soll.

15. Ein Verfahren zum Aushandeln einer Augmented-Reality-Dienstunterstützungsfähigkeit, das von einem Nutzergerät, UE, durchgeführt wird, wobei das Verfahren folgende Schritte aufweist:
Senden (701) einer Registrierungsanforderung an ein drittes Netzwerkelement, wobei die Registrierungsanforderung eine Fähigkeit zum Unterstützen eines Augmented-Reality-Dienstes trägt; und
Empfangen (702) von Registrierungsannahmeinformationen, die von dem dritten Netzwerkelement zurückgegeben werden, wobei die Registrierungsannahmeinformationen eine Antwort tragen, ob der Augmented-Reality-Dienst unterstützt werden soll.

## Revendications

1. Procédé de négociation d'une capacité de prise en charge de services de réalité augmentée, réalisé par un premier élément de réseau, le procédé comprenant :
la réception (201) d'une demande de création de contexte de gestion de session, SM, et la détermination du fait qu'un réseau prend en charge un service de réalité augmentée ; et
l'envoi (202) à un deuxième élément de réseau d'une réponse indiquant si le réseau prend en charge le service de réalité augmentée ;
dans lequel la demande de création de contexte SM transporte une première cellule, et la première cellule transporte une capacité d'un équipement utilisateur, UE, à prendre en charge le service de réalité augmentée.

2. Procédé selon la revendication 1, comprenant en outre :
la détermination du fait que le réseau prend en charge le service de réalité augmentée d'une session d'unité de données de protocole, PDU, selon au moins l'un des éléments suivants : une information d'abonnement, une capacité de prise en charge de réseau et une politique locale.

3. Procédé selon la revendication 1 ou 2, dans lequel une capacité précisant si le réseau prend en charge le service de réalité augmentée est transportée dans une réponse de création de contexte SM ou une réponse de mise à jour et est envoyée au deuxième élément de réseau.

4. Procédé selon l'une des revendications 1 à 3, dans lequel, en réponse au réseau prenant en charge le service de réalité augmentée, le procédé comprend en outre :
l'exécution locale d'une décision d'une règle politique et de facturation ; ou
l'exécution d'une sélection de fonction de contrôle de politique, PCF ; sur la base d'une PCF sélectionnée, la détermination d'une règle de service de réalité augmentée, ou la détermination d'une règle de politique de flux de données et de contrôle de facturation, PCC, pour prendre en charge le service de réalité augmentée.

5. Procédé selon l'une des revendications 1 à 4, comprenant en outre :
l'envoi d'une information d'acceptation d'établissement de session d'unité de données de protocole, PDU, au deuxième élément de réseau, dans lequel l'information d'acceptation d'établissement de session PDU transporte un paramètre de qualité de service, QoS, pour prendre en charge le service de réalité augmentée.

6. Procédé de négociation d'une capacité de prise en charge de services de réalité augmentée, réalisé par une fonction côté réseau qui comprend un premier élément de réseau et un deuxième élément de réseau, le procédé comprenant :
la réception (301), par le deuxième élément de réseau, d'une demande d'établissement de session d'unité de données de protocole, PDU, envoyée par un équipement utilisateur, UE,
la détermination (302), par le premier élément de réseau, du fait qu'un réseau prend en charge un service de réalité augmentée au cours d'un processus d'établissement de session, en réponse à une information de demande d'établissement de session transportant une capacité de l'UE à prendre en charge le service de réalité augmentée, et
l'envoi (303), par le deuxième élément de réseau, d'un message de strate de non-accès, NAS, à l'UE, dans lequel le message NAS transporte une réponse précisant si le service de réalité augmentée doit être pris en charge.

7. Procédé selon la revendication 6, dans lequel :
l'information de demande d'établissement de session transportant la capacité de l'UE à prendre en charge le service de réalité augmentée comprend : la demande d'établissement de session transportant au moins l'un des éléments suivants : une capacité de réseau central de gestion de session de 5^{e} génération, 5GSM, ou une option de configuration de protocole, PCO, la capacité de réseau central 5GSM comprenant la capacité de l'UE à prendre en charge le service de réalité augmentée, et la PCO comprenant la capacité de l'UE à prendre en charge le service de réalité augmentée.

8. Procédé selon la revendication 6, dans lequel :
le premier élément de réseau est configuré pour réaliser une étape du procédé selon l'une des revendications 1 à 2 et 4 à 5.

9. Procédé selon l'une des revendications 6 à 8, dans lequel
le deuxième élément de réseau est configuré pour recevoir la demande d'établissement de session PDU envoyée par l'UE, sélectionner le premier élément de réseau sur la base de la demande d'établissement de session PDU, et envoyer une demande de création de contexte SM au premier élément de réseau sélectionné ; la demande de contexte SM transporte la capacité de l'UE à prendre en charge le service de réalité augmentée ; et
après avoir reçu une information d'acceptation d'établissement de session PDU renvoyée par le premier élément de réseau, le deuxième élément de réseau est configuré pour envoyer un identifiant de session PDU et l'information d'acceptation d'établissement de session PDU à l'UE par l'intermédiaire du message NAS ;
facultativement, le deuxième élément de réseau est configuré pour stocker la capacité de l'UE à prendre en charge le service de réalité augmentée en tant que contexte de niveau de session PDU dans un contexte d'UE.

10. Procédé de négociation d'une capacité de prise en charge de services de réalité augmentée, réalisé par un équipement utilisateur, UE, le procédé comprenant :
l'envoi (401) d'une demande d'établissement de session d'unité de données de protocole, PDU, dans laquelle la demande d'établissement de session PDU transporte une première cellule, et la première cellule transporte une capacité de l'UE à prendre en charge un service de réalité augmentée ;
la réception (402) d'un message de strate de non-accès, NAS, envoyé par un côté réseau, dans lequel le message NAS transporte une réponse précisant si le réseau prend en charge un service de réalité augmentée.

11. Procédé selon l'une des revendications 1 à 10, dans lequel la première cellule comprend une capacité de réseau central de gestion de session de 5^{e} génération, 5GSM, ou une option de configuration de protocole, PCO.

12. Procédé de négociation d'une capacité de prise en charge de services de réalité augmentée, réalisé par un deuxième élément de réseau, le procédé comprenant :
la réception (501) d'une demande d'enregistrement provenant d'un équipement utilisateur, UE, la détermination (502), par le deuxième élément de réseau, du fait qu'un réseau prend en charge un service de réalité augmentée en réponse à la demande d'enregistrement transportant une capacité de l'UE à prendre en charge le service de réalité augmentée, et
l'envoi d'une information d'acceptation d'enregistrement à l'UE, dans lequel l'information d'acceptation d'enregistrement transporte une réponse précisant si le service de réalité augmentée doit être pris en charge.

13. Procédé selon la revendication 12, dans lequel la détermination du fait que le réseau prend en charge le service de réalité augmentée comprend :
la détermination du fait que le réseau prend en charge le service de réalité augmentée selon au moins l'un des éléments suivants : une information d'abonnement, une capacité de prise en charge de réseau et une politique locale ;
facultativement, le procédé peut en outre comprendre :
l'envoi d'un identifiant de groupe d'un service de réalité augmentée à l'UE à travers un troisième élément de réseau ou directement, dans lequel l'identifiant de groupe est utilisé pour associer une pluralité d'UE d'un groupe de service de réalité augmentée, ou pour associer une pluralité de sessions de service de réalité augmentée d'une seule UE, ou pour associer une pluralité de flux de données d'une seule session d'UE.

14. Procédé de négociation d'une capacité de prise en charge de services de réalité augmentée, réalisé par une fonction côté réseau qui comprend un deuxième élément de réseau et un troisième élément de réseau, le procédé comprenant :
la réception (601), par le troisième élément de réseau, d'une demande d'enregistrement provenant d'un équipement utilisateur, (UE),
la détermination (602), par le deuxième élément de réseau, du fait qu'un réseau prend en charge un service de réalité augmentée, en réponse à la demande d'enregistrement transportant une capacité de prise en charge de service de réalité augmentée de réseau, et
l'envoi (603), par le troisième élément de réseau, d'une information d'acceptation d'enregistrement à l'UE, dans lequel l'information d'acceptation d'enregistrement transporte une réponse précisant si le service de réalité augmentée doit être pris en charge.

15. Procédé de négociation d'une capacité de prise en charge de services de réalité augmentée, réalisé par un équipement utilisateur, UE, le procédé comprenant :
l'envoi (701) d'une demande d'enregistrement à un troisième élément de réseau, dans lequel la demande d'enregistrement transporte une capacité à prendre en charge un service de réalité augmentée ; et
la réception (702) d'une information d'acceptation d'enregistrement renvoyée par le troisième élément de réseau, dans laquelle l'information d'acceptation d'enregistrement transporte une réponse précisant si le service de réalité augmentée doit être pris en charge.
